Europäisches Patentamt

European Patent Office

Office européen des brevets

(11) Publication number: **0 424 071 A2**

# EUROPEAN PATENT APPLICATION

(21) Application number: **90311271.2**

(22) Date of filing: **15.10.90**

(51) Int. Cl.⁵: **G10L 5/06, G10L 3/00**

(30) Priority: **16.10.89 GB 8923305**

(43) Date of publication of application:
**24.04.91 Bulletin 91/17**

(84) Designated Contracting States:
**AT BE CH DE DK ES FR GB GR IT LI LU NL SE**

(71) Applicant: **LOGICA UK LIMITED**
**68 Newman Street**
**London W1A 4SE(GB)**

(72) Inventor: **Peckham, Jeremy Burford**
**Millgarth 49 Hinton Road**

**Fulbourn Cambridge(GB)**
Inventor: **Frangoulis, Eleftherios Dimitrios**
**57b Kimberley Road**
**Cambridge CB4 1HG(GB)**
Inventor: **Thomas, Trevor Joseph**
**126 The Rowans**
**Milton, Cambridge(GB)**

(74) Representative: **Beresford, Keith Denis Lewis**
**et al**
**BERESFORD & Co. 2-5 Warwick Court High**
**Holborn**
**London WC1R 5DJ(GB)**

(54) **Speaker recognition.**

(57) A speaker recognition system tests data during enrolment by preparing a template for a word from repeated utterances, comparing further repeated utterances with the template and updating the template with accepted utterances, and finally accepting or rejecting the updated template on the basis of how many of the further utterances are accepted and how many rejected. This protects the quality of the template formed from the enrolment utterances. In addition to storing final versions of the templates for each of a plurality of words, data is stored relating to the co-variance of utterances of different words.

During analysis of the spoken inputs, the pitch of voiced sections is determined and this is used both to enable determination of the start and end points of the spoken utterance and also to determine the timing of analysis frame periods.

During speaker recognition, a plurality of test utterances are obtained from the unknown speaker, and these are analysed separately and the analysis results combined using the co-variance data to make a recognition decision.

The system is particularly useful for speaker verification to verify a previous claimed identity. The system has particular application to the recognition of individuals over the telephone.

FIG.1.

## SPEAKER RECOGNITION

The present invention relates to speaker recognition. It has particular application in the field of speaker verification, but may also be used in related fields such as speaker identification.

Many attempts have been made to analyse speech. Most of these attempts are directed to speech recognition. The object of speech recognition is to identify the words which have been spoken. Speech recognition systems may be divided into two types. The first type is speaker-independent, that is to say the system is intended to be able to recognise spoken words regardless of who is speaking. The second type is speaker-dependent, in which the system is trained to recognise the speech of one or more selected individuals. Clearly, a speaker-independent system is more useful, but because of the variations in speech between different people, speaker-dependent systems are easier to construct and they tend to be more reliable.

Another form of speech analysis relates to speaker recognition. In this case, the object of the analysis is to recognise the person who is speaking. In a manner analogous to the manner in which speech recognition systems can be divided into speaker-independent and speaker-dependent systems, speaker recognition systems can be divided into text-independent and text-dependent systems. In a text-independent system, a speaker can speak any words and the system will attempt to recognise the speaker from the characteristics of his or her speech. In text-dependent systems, the speaker must speak a pre-selected test utterance (word or phrase). Text-independent systems will be more convenient for the user, but may perform less well than text-dependent systems. Text-independent systems normally require more enrollment speech from an individual before the individual can be recognised by the system, and use statistical averaging over selected acoustic features or locate comparable speech events in test and reference utterances, since a simple comparison between test and reference utterances cannot be made.

It is also possible to divide speaker recognition systems in another way. Most speaker recognition systems can be characterised as either being a speaker identification system or a speaker verification system. In a speaker identification system, the system attempts to decide whether the speaker is one of a group of known individuals, and if so which one, or whether the speaker is a stranger. In a speaker verification system, the individual to be recognised first claims to have a particular identity, which is the identity of one of a group of individuals known to the system, and then the speech of the individual to be recognised is analysed, to determine whether or not the individual has the claimed identity. Thus, a speaker verification system is used to verify a previously-claimed identity, whereas in a speaker identification system, the system has to identify an individual who has not previously made any particular identity claim. Generally speaking, a speaker verification system need only compare the input speech with the characteristics of the individual whose identity is claimed, whereas a speaker identification system will have to compare the characteristics of the input speech with the characteristics of all known individuals. Accordingly, speaker verification systems tend to provide an output, for a given degree of analysis, much more quickly than speaker indentification systems, particularly when the group of known individuals is large.

The present invention is particularly relevant to text-dependent speaker recognition systems, but some aspects may also be useful in text-independent systems. It is most likely to be useful in speaker verification, although it may be useful in speaker identification, particularly if the number of individuals known to the system is relatively small.

A reliable speaker recognition system would have a large number of uses. For example, it could be incorporated in the security system for obtaining access to highly secure establishments, and systems for controlling access to ordinary offices and domestic buildings. It could be used for intruder recognition in security systems. It could be used to verify claims to particular identities made by people speaking over the telephone. It could be used to control access to computerised databases. In one possibility, a speaker recognition system could be used in a home banking arrangement, in which an account holder wishing to instruct transactions on his or her account using a personal computer or multiple frequency tone dialling telephone, first claims an identity by entering a pass word or a personal identification number, and is then asked to speak into the telephone for identity verification.

Unfortunately, known speaker verification systems do not tend to perform with sufficient accuracy. An imposter acceptance rate of one per cent could be unacceptably high in some circumstances, whereas a valid user rejection rate of one per cent will be found unacceptably annoying by many users. To some extent, error rates can be reduced by increasing the complexity of the system, but this tends to increase the time taken to come to an identification decision. In many circumstances, users will not accept a system which takes more than two or three seconds to make a decision.

The present invention arises in part from a recognition that previous systems did not provide sufficiently accurate decisions sufficiently fast because of prejudices which directed the designers of previous systems away from useful techniques.

In particular, people working in the field of speaker recognition tend also to work in the field of speech recognition. They tend to regard the two forms of speech analysis as being essentially similar, and tend to apply lessons learnt and conclusions drawn in the field of speech recognition to the field of speaker recognition. However, this tendency can be inappropriate. The differences in speech behaviour between different speakers make speech recognition more difficult, whereas they are at the heart of speaker recognition. Conversely, the difference between the characteristics of different spoken words is of the essence in speech recognition, but is less relevant to speaker identification. Thus, conclusions that certain analysis techniques are or are not reliable or useful in speech recognition cannot automatically be transferred to the field of speaker recognition.

A further apparent prejudice in this field is that many workers appear to discard analysis techniques which do not produce accurate results. The present invention derives in part from a recognition that this rejection is not necessarily appropriate in speaker recognition. If a technique for measuring a parameter produces an incorrect answer for a particular speaker, but consistently produces the same incorrect answer for that speaker, the technique may still be of use in speaker recognition, since the consistency of its output means that it can still be used to recognise the speaker.

In one aspect of the present invention there is provided a method of enrolling speakers in a speech analysis system in which a plurality of enrolment utterances are obtained and compared with a provisional template , and inconsistent enrolment utterances are not used to form the reference template. Embodiments of this aspect of the present invention may tend to provide better quality templates.

In a second aspect of the present invention there is provided a method of enrolling a speaker in a speech analysis system in which utterances of a plurality of words or phrases (texts) are obtained from a speaker, and data representing the co-variability of the utterances of different texts is stored in addition to the reference templates. The data representing co-variability may be used during later speech comparison operations to enhance the accuracy of the comparison operations.

In a third aspect of the present invention, periods of an input waveform having pitch are identified, in order to identify a spoken utterance in the input waveform.

In a fourth aspect of the present invention there is provided a speaker recognition method in which an input utterance is analysed in each of a plurality of frame periods, the timing of the frame periods being determined in accordance with analysed pitch periods. By controlling the timing of the analysis frame periods in this manner, it is possible to reduce inconsistencies of analysis which might otherwise arise due to the difference between the length of the analysis period and the length of the pitch period.

In a fifth aspect of the present invention there is provided a method of speaker identification in which a plurality of utterances are obtained from an unknown speaker and are analysed independently, and the analysis results are combined to make an identification determination.

An embodiment of the present invention, given by way of example, will now be described with reference to the accompanying drawings, in which:

Figure 1 shows schematically a secure site entry arrangement using an embodiment of the present invention;

Figure 2 shows schematically a controlled telephone access arrangement for a computer using an embodiment of the present invention;

Figure 3 shows schematically a speech waveform together with possible analysis frame period start and end points;

Figure 4 shows schematically a relatively high pitch speech waveform together with the outputs from a pitch analyser;

Figure 5 shows schematically the relative timing between a pitch analyser output and analysis frame periods;

Figure 6 shows schematically an energy plot for an input spoken word in a noisy system;

Figure 7 shows schematically a matrix of parameters obtained from analysing a speech input;

Figure 8 is a schematic flow diagram of a first part of the enrolment process in an embodiment of the present invention;

Figure 9 is a schematic flow diagram of the second part of the enrolment process in an embodiment of the present invention;

Figure 10 illustrates a co-variance matrix;

Figure 11 illustrates schematically a matrix multiplication operation performed in the methods of Figures 9 and 12; and

Figure 12 is a schematic flow diagram of a verification process in an embodiment of the present invention;

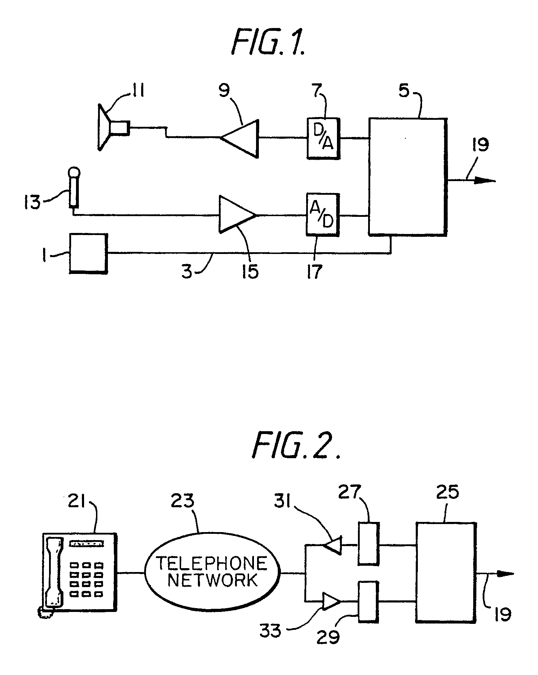

Figures 1 and 2 show examples of speaker verification arrangements in which embodiments of the present invention may be used. The operation of these arrangements will now be described, assuming that the speaker verification system used in them is the embodiment which will be described with reference to the remaining Figures.

The arrangement of Figure 1 may be incorporated into part of a system for controlling access to a location. In use of this arrangement, a person wishing to enter the location approaches the arrangement. All permitted personnel are issued with identification cards having magnetic machine-readable strips. The person passes his or her identification card through a magnetic card reader 1, which reads the information recorded on the magnetic strip. This information includes the identity of the person to whom the card was issued. This information is provided over a line 3 to a computer 5. In this way, the person makes an identification claim to the computer 5. The speaker verification system is then used to verify this identification claim.

The computer outputs pre-stored or synthesised speech data to a digital-to-analogue converter 7. The analogue output from the D-A converter 7 is amplified by an amplifier 9 and provided to a loud speaker 11 in the vicinity of the magnetic card reader 1. In this manner, the computer 5 asks the person to say a chosen test utterance (word or phrase). In response, the speaker says the test utterance, which is picked up by a microphone 13, amplified by an amplifier 15, and supplied to an analogue-to-digital converter 17. The digitised utterance is supplied to the computer 5 for analysis.

Part of the processing carried out on the input speech is frequency analysis. The computer 5 may include digital filters. Alternatively, the analogue-to-digital converter 17 may include an analogue filter bank the outputs of which are digitised, so that the digital representation of the input speech provided to the computer 5 has already been frequency-analysed.

By means of the loud speaker 11, the computer 5 will ask the person to speak three selected test utterances in turn. Preferably, the speaker verification system stores template information for all speakers known to it for a larger number of utterances, for example ten, and selects the three used on any one occasion in an unpredictable manner. This reduces the chances of success of an imposter who has obtained tape recordings of the test utterances as spoken by the correct individual.

The test utterances picked up by the microphone 13 and supplied to the computer 5 are used to perform a speaker verification, to discover whether the speaker has the identity claimed through the magnetic card reader 1. At the end of the verification process, a verification output will be provided. The verification output is indicated at 19, as being supplied by the computer 5 to some other system. For example, this might be a control signal to an electrically controlled door lock, or a signal to a display provided to a security guard. However, it should be realised that the verification output 19 might be provided purely within the computer 5, depending on what it is desired for the arrangement to do following successful or unsuccessful verification of the person attempting to gain entry. The computer 5 will also normally use the recognition output to provide a message to the person through the loud speaker 11 stating whether verification has been successful or unsuccessful.

Figure 2 shows an alternative arrangement, typically for use when a person wishes to obtain access to a computerised database over the telephone. In the arrangement of Figure 2, a telephone 21 equipped with multiple frequency tone dialling is connected through a telephone network 23 to a computer 25. The computer 25 is interfaced to the telephone network through a digital-to-analogue converter 27, an analogue-to-digital converter 29 and amplifiers 31, 33 in an arrangement generally similar to that used in Figure 1. In use, the user dials up the computer 25 using the telephone 21, in order to gain access to a computerised database, for example a database relating to a bank account. At some point during the logging on process, the computer 25 will ask the user to enter an identification code through the key pad of the telephone 21. This identification code will, in effect, be a claim by the user to have a particular identity. This identity is then verified using the speaker verification system, in a manner similar to that described with reference to Figure 1. The speaker and microphone in the telephone hand set will perform the functions of the loud speaker 11 and microphone 13 in Figure 1.

In this system, the recognition output 19 will typically be used within the computer system to permit access to the relevant data and to permit transaction instructions to be entered. The recognition output 19 may not be provided to any other device external to the computer 25, except that a message may be provided to the user to inform him that recognition has been successful.

A speaker verification system embodying the present invention, and suitable for use in the arrangements described with reference to Figures 1 and 2, will now be described.

4

## CHOICE OF TEST UTTERANCES

During the verification process, each speaker is asked to make three separate test utterances, typically of three different words. These words will be selected from a group of, e.g. ten words for which data concerning the speaker whose identity is claimed will have been stored during an enrolment session. The effectiveness of the speaker verification system is influenced to some extent by the choice of words used for the test utterances. The process of selecting suitable words will inevitably involve a degree of trial and error. However, certain rules can be followed to identify words which are more likely to be suitable. First, each word preferably contains at least two syllables. The words should be chosen so that each set of three to be used in a verification procedure provides a wide range of consonants, vowels and pronunciation timing. Finally , it is important to find words which are pronounced in a consistent manner.

The requirement for consistent pronunciation rules out many otherwise suitable words. For example, in English the word "Peterborough" is not suitable. It has been found that this word may be pronounced with four syllables

$$(pi:/t\mathcal{3}:/b\wedge/r\partial)$$

or may be pronounced with three syllables

$$(pi:/t\mathcal{3}:/br\partial).$$

The same speaker may switch between the two alternative pronunciations randomly between different occasions on which the word is spoken.

It has been found that satisfactory performance can be obtained using the words "Manchester", "London" and "Twenty-two".

## CHOICE OF ANALYSIS PARAMETERS

The input words are analysed to extract normalised cepstral coefficients and pitch. The manner in which these parameters are obtained will be discussed below.

Further parameters may also be used, such as delta cepstral coefficients (the differential of cepstrum with frame period), normalised energy (the ratio of total input energy in a frame to the peak value for the analysed utterance), high/low frequency energy ratio (the ratio of energies in a frame for frequencies above and below a threshold of e.g. 2KHz) and duration of an utterance.

It has been found in experiments that in fact a highly effective speaker verification system can be created using cepstral coefficients alone but in the preferred embodiment pitch is also analysed to permit pitch synchronous analysis, as is described below. Pitch may also be used as a verification parameter.

## PITCH SYNCHRONOUS ANALYSIS

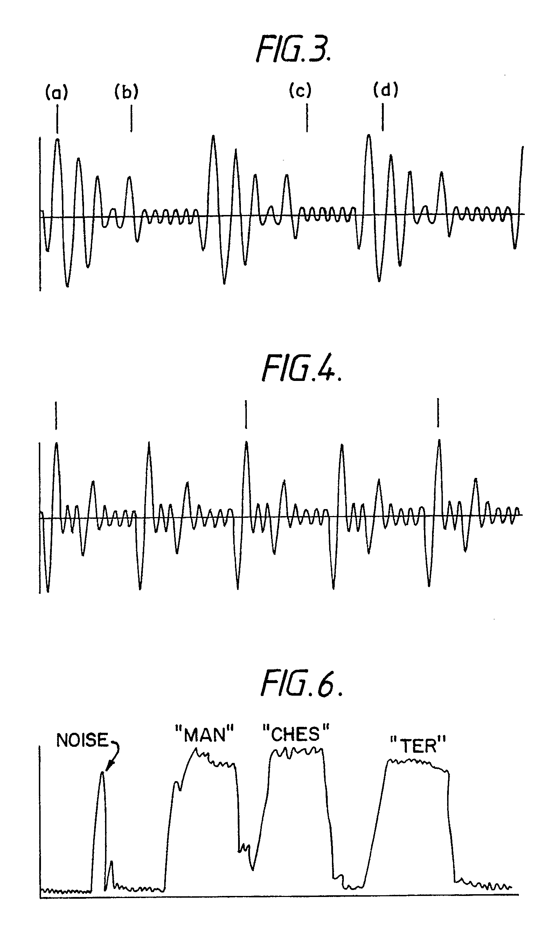

In the analysis of the input waveform to obtain the cepstral coefficients and to obtain the high/low energy ratio, the input is analysed in a plurality of frame periods. Variations in the relative powers of different frequencies in a frame period of the input waveform will alter the values obtained for both of these parameters. For this reason, it is preferable to perform the analysis in a manner which is referred to herein as "pitch synchronous". The advantage of pitch synchronous analysis will be described with reference to Figure 3.

Figure 3 shows schematically an example of a speech waveform. Analysis of the speech waveform will be carried out on each of a series of frame periods. For the purposes of illustration, it is assumed that the frame period is slightly longer than one and a half times the basic pitch period of the waveform illustrated in Figure 3. Accordingly, if a frame period begins at instant (a) in Figure 3, it will end at instant (c). If instant (a) is viewed as being the beginning of a pitch period, then it will be seen that the frame period (a) to (c) includes the first part of two successive pitch periods, but contains the second part of only one pitch period. Accordingly, the results of the analysis will not reflect the properties of the speech waveform in the precise correct proportions, but will give an extra emphasis to the properties of the first portion of the pitch period. It is equally possible for a frame period to be the period from instant (b) to instant (d) in Figure 3. In this case also, : results of the analysis will not reflect the properties of the speech waveform in precisely the corre: proportions, but in this case the end portion of the pitch period is over emphasised. Accordingly, differ-.ht analysis of the same speech waveform, using the same length of frame period, can produce different analysis results. This inconsistency makes it more difficult to perform reliable speaker verification.

It would be possible, in theory, to overcome the problem outlined above by ensuring that the frame period was always equal to the pitch period, in which case no portion of the pitch period would be over emphasised, and the analysis results would be the same regardless of the starting point of the frame period. However, it is very difficult to match the frame period to the pitch period in practice, as the pitch period varies considerably from speaker to speaker and also varies slightly during the speech of any speaker. Alternatively, it is possible to ensure that for each frame period, the analysis always starts at the same point in the pitch period. This is the technique used in pitch synchronous analysis.

Methods are known of analysing a speech waveform so as to identify adjacent pitch peaks, that is to say peaks which are spaced apart by one pitch period. Further information is given in: L.R. Rabiner, M.J. Cheng, A.E. Rosenberg, and C.A. McGonegal, "A Comparative Performance Study of Several Pitch Detection Algorithms," IEEE Trans. Acoust., Speech and Signal Proc., Vol. ASSP-24, No. 5, pp. 399-418, October 1976; B. Gold, "Computer Program for Pitch Extraction," J. Acoust. Soc. Am., Vol.34, No.7, pp. 916-921, 1962; B. Gold and L.R. Rabiner, "Parallel Processing Techniques for Estimating Pitch Periods of Speech in the Time Domain," J. Acoust. Soc. Am., Vol.46, No.2, Pt.2, pp.442-448, August 1969; and Furui, IEEE Trans. Acoust., Speech and Signal Proc., Vol.ASSP-29, No.3, pp.342-350, June 1981. We prefer to use the method described in the book "Knowledge-based Approach to Speech Pattern Recognition" by Michael Allerhand, published in 1987 by Kogan-Page.

Methods of pitch period identification, such as that described by Allerhand, do not always identify the pitch period correctly. Typically, with a high pitched speaker, such as a woman, the system fails to detect every pitch period and provides outputs marking only alternate pitch peaks, so that the measured pitch output by the analysis method is only a half of the correct pitch of the speech waveform. It appears that the tendency of such methods to produce these errors has caused those skilled in the art to regard the method as unreliable, and therefore to prejudice them against using the method. However, it has been found that the errors made by Allerhand's system are consistent, so that a high pitched woman's voice is consistently misanalysed in the same manner. Under these circumstances, there is in fact no disadvantage caused by the incorrect analysis. Since the same errors would have been made both during enrolment of the speaker and during verification, the verification system as a whole would operate in a consistent manner and the reliability of the verification process is not impaired.

Figure 4 shows an example of pitch analysis on a relatively high pitched speech waveform. In Figure 4, the peaks identified by the pitch analysing program as being pitch peaks one pitch period apart are marked by a vertical line above the peak. It will be seen that in fact the pitch has been analysed as one octave too low, i.e. the analysed pitch period is twice the length of the true pitch period, and there exist non-identified pitch peaks each half way between two respective identified peaks.

In operation of the preferred embodiment of the present invention, a frame period is defined for each 15 ms period of the input signal during analysis. However, the period for which a frame lasts, i.e. the period of the waveform which is used for the analysis (e.g. (a) to (b) in Figure 3), is typically longer than 15 ms, and is preferably about 25 ms. These analysis frame periods do not start precisely 15 ms apart. Instead, a series of instants 15 ms apart are defined, and in respect of each instant an analysis frame period is identified which begins with the most recent pitch peak to have been identified by the pitch analyser. Thus, the analysis of frame periods may be unevenly distributed along the input waveform.

Figure 5 shows the timing of these 15 ms periods, the pitch peaks from the pitch analyser and the analysis frame periods. Since a new analysis frame period is begun on average every 15 ms, but each analysis frame period lasts for longer than 15 ms, there will inevitably be occasions on which successive analysis frame periods overlap. This can be seen in Figure 5.

When the most recent pitch peak at the end of one of the 15 ms periods is relatively near the beginning of the 15 ms period, the corresponding analysis of frame period will similarly begin early during the 15 ms period. This is shown by the second pitch peak in Figure 5. It may be the case that the following pitch peak occurs so early during a 15 ms period that the pitch peak after that falls within the same 15 ms period, so that the next successive analysis frame period begins two pitch periods after the previous one. As can be seen in Figure 5, this results in irregularities in the distribution of the analysis frame periods. If the length of a pitch period is more than half the length of an analysis frame period, there will be a gap between successive analysis frame periods. This can also be seen in Figure 5. The portion of the input speech waveform occuring in this gap is not analysed in any frame period.

A pitch analysis method will typically only identify a string of pitch peaks during periods of the speech waveform which are voiced. However, during the pronunciation of many words there are brief periods of silence. The pitch analysis method will fail to identify any pitch peaks during this period. Under some circumstances, difficulties can also arise during unvoiced phonemes, although this is less of a problem. Since pitch synchronous analysis requires a succession of pitch peaks to define the starting points for analysis frame periods, portions of the speech waveform during which no pitch peaks can be identified cause problems in the process of identifying analysis frame periods.

Accordingly, if the input speech waveform contains an unvoiced period greater than 25 ms, analysis points identifying the beginning of successive analysis frame periods are generated automatically every 15 ms. The 15 ms spacing between these artificial analysis points is chosen to match the 15 ms periods between the instants which define the requirement to identify a new analysis frame period. A period of 25 ms is chosen as the length of unvoiced waveform which causes artificial analysis points to be generated because it is the same as the length of an analysis frame period, and therefore ensures that only a relatively small part of the input waveform will not fall within any analysis frame period when an unvoiced portion of the input waveform begins. It is also important that this period is chosen to be greater than the pitch period of the lowest pitch frequency which the pitch analyser is able to recognise.

The period of 15 ms between successive instants defining the requirement to identify a new analysis frame period is chosen as a compromise between starting new frame periods so frequently that the system is overloaded with data and starting frame periods so infrequently that valuable information is lost. This period corresponds to an average rate of sixty six and two thirds frames per second, which is frequently used as the frame rate in speaker identification and speech recognition. However, other average frame rates are possible.

It is preferred to program the pitch analyser to detect pitches in the input waveform between 70 Hz and 150 Hz. This range extends over slightly more than one octave. It is important that the range should cover at least one octave, so as to ensure that all voice pitch frequencies occurring above the analyser range will have a sub-harmonic within the analyser range which the analyser can identify by integer multiplying the true pitch period in the manner illustrated in Figure 4. If the analyser range was less than an octive, there would be a possible voice pitch frequency just above the analyser range, for which the corresponding frequency obtained by missing every alternate pitch peak and doubling the pitch period is below the analyser range, so that the pitch analyser would fail to analyse speech having this pitch frequency in a useful manner.

It is important that the bottom frequency of the pitch analyser range should be relatively low, and below the normal speaking pitch of all people to be enrolled on the system. If the voice pitch frequency of the input waveform is below the lowest frequency which can be analysed by the pitch analyser, the pitch analyser is forced to identify more than one pitch peak in each true pitch period of the input waveform. Consequently, different analysis frame periods will not necessarily begin at matching points in respective pitch periods of the input waveform. This creates the possibility of inconsistencies in the analysis of the type already described with reference to Figure 3. However, it is disadvantageous to set the lower frequency limit of the pitch analyser very low, as it is preferable to keep the longest possible pitch period shorter than the period of each analysis frame, and there is also a possibility of overloading the analysis system with data if the lowest pitch frequency is set very low. Additionally, if the pitch analyser is enabled to detect very low frequencies it is more likely to be confused and create spurious pitch detections in response to low frequency noise.

The upper frequency limit for the pitch analyser is selected to be slightly more than double the lower limit, so as to ensure that the analyser covers an octave. There is no need for the analyser to cover more than an octave, and increasing the frequency range tends to increase the amount of data which has to be processed.

## DETERMINATION OF WORD END POINTS

During both the enrolment process and the verification process, a speaker says a word and the speech waveform is input to the speaker verification system. Before and after the word, there will be periods during which the speaker is not speaking. These periods will contain noise, and particularly if the speaker verification process is conducted over a telephone line, there may be relatively high amplitude noise pulses. Figure 6 shows schematically the energy envelope for the input waveform when the speaker says "Manchester". In this example, the spoken word has been shortly preceded by a noise pulse.

In order to conduct speaker verification reliably, the system should respond to the spoken word but not to the periods of noise appearing before and after it. Therefore, the system should identify the start and end points of the spoken word in the input waveform. For reliable operation, these start and end points should be identified so that the system analyses substantially the whole of the spoken word, and substantially none of the surrounding noise. Additionally, reliable operation means that the start and end points of a word must be identified consistently by the system, even if slightly incorrectly.

Identification of word end points is discussed in: L.R.Rabiner and M.R. Sambur, "An Algorithm for Determining the Endpoints of Isolated Utterances," Bell Syst. Tech. J., Vol.54, No.2, pp. 297-315, February 1975; and M.R. Sambur and L.R. Rabiner, "A Speaker Independent Digit-Recognition System," Bell Syst. Tech. J., Vol.54, No.1, pp.81-102, January 1975.

The normal way of identifying a portion of speech and separating it from surrounding noise is to use the overall energy envelope of the input waveform. One common method is to identify the highest energy peak in the input, and then move outwards from this peak (i.e. forwards and backwards in time) to discover the instants at which the value of the energy envelope falls to 10 per cent of the peak. However, this method does not always identify the start and end points of a word correctly, as will now be described with reference to Figure 6.

As can be seen in Figure 6, there are brief gaps of very low energy between the syllables in the spoken word. As shown in Figure 6, the maximum energy peak is during the syllable "Man". The low level to which the energy falls between the syllables "ches" and "ter" may be so low as to be less than 10 per cent of the maximum energy value. Therefore, if the system for identifying the start and end points of the spoken word takes the maximum energy peak in the syllable "Man", and moves forwards and backwards in time until the energy falls to 10 per cent of the peak value, the system will identify only the syllables "Man" and "ches" as being part of the spoken word, and the syllable "ter" will be ignored and not used in the analysis of the spoken word.

One way of avoiding this problem is to identify a time period during which the word is expected to be, perhaps by identifying the maximum energy peak and defining the time period to start and end predetermined amounts before and after the instant of maximum energy. The system can then move forwards in time from the beginning of the time period, and backwards in time from the end of the time period, until the energy level rises to 10 per cent of the peak value.

Provided that the time period is large enough, this method is unlikely to mis-identify the word so as to leave part of it out. However, if there is a relatively high energy noise pulse in the input closely spaced before or after the word, so as to come within the time period, this method will tend to mis-identify the noise pulse as the beginning or the end of the word. In the example shown in Figure 6, this method would identify the word as beginning with the noise pulse shown in the Figure, rather than at the beginning of the syllable "Man". This is unsatisfactory, since the result of analysing noise is not predictable, and noise pulses will not be present before or after the word in a consistent manner or with a consistent spacing from the word, so that the analysis result will vary between different utterances of the same word by the same speaker. This inconsistency reduces the reliability of the speaker verification method.

In the present embodiment, the output of the pitch analyser is used to identify the spoken word in the input waveform. Typically, noise has no pitch which can be analysed by the pitch analyser, whereas all voiced portions of the spoken word will have a pitch. Accordingly, if there is a portion of the input waveform having a pitch, or two or more closely spaced portions having pitch, surrounded by portions of the input waveform without pitch, the portion or portions having pitch can be identified as being the input spoken word.

Identifying the portion or portions having pitch as making up the spoken word provides consistent analysis results, and is reasonably good at correctly identifying most of the input word for analysis while not mis-identifying a significant portion of noise as the input word. However, this method can result in the speech analysis not using portions of the input word at the beginning and end of it, if these portions are unvoiced and therefore have no pitch. For example, the beginning portion of the word "Twenty-two" will not be identified as being part of the word if the identification depends solely on the presence of pitch.

Accordingly, it is most preferred to use the presence of pitch to identify a period of the input waveform wholly taken up by the input word. Typically, the end points of this period, where the output from the pitch analyser begins and ends, will have a relatively high proportion of the maximum energy of the word, for example about 30 per cent of the maximum energy. This system then looks backwards in time from the beginning of this period and forwards in time from the end of this period to discover the points where the energy falls to 10 per cent of the maximum value. These points are used to identify the start and end of the spoken word for analysis.

This method of identifying the start and end points of the spoken word has been found to provide consistent results and to be effective at including substantially all of the actual spoken word in the identified word for analysis, while including very little noise if any in the identified word.

CEPSTRAL COEFFICIENT EXTRACTION

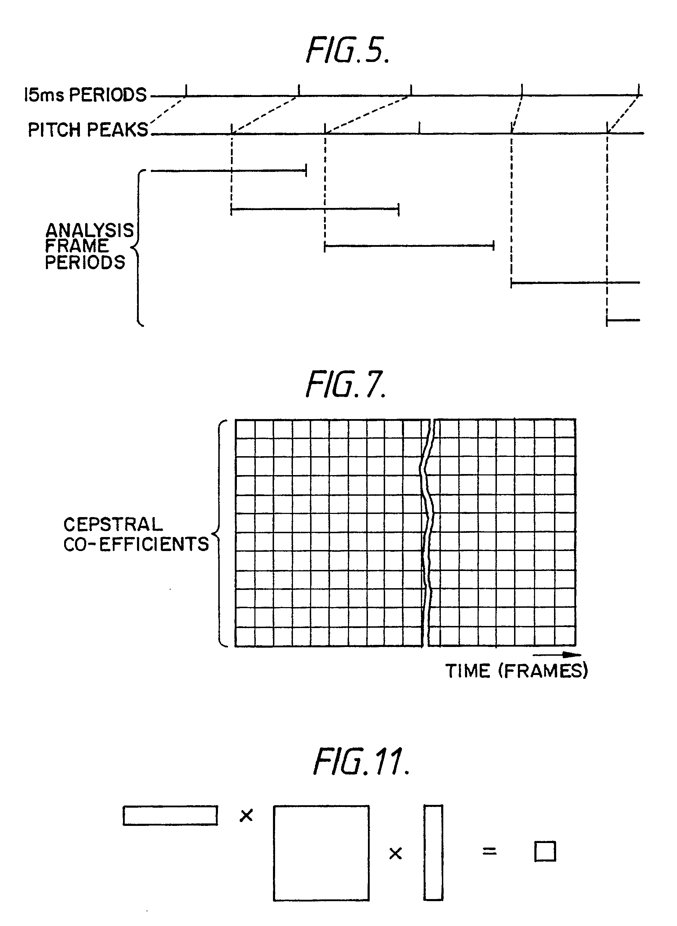

The result of analysing the input waveform representing the spoken word can be represented as a matrix in the form shown in Figure 7. The matrix is 12 values high. Its length represents the time dimension and each column of the matrix represents one analysis frame period. Each row represents a respective one of the first twelve cepstral coefficients.

It is well known in the art how to calculate cepstral coefficients. These coefficients may be calculated from the log of the frequency spectrum obtained by performing a Fourier transform on the input waveform. Alternatively, they can be obtained using linear prediction. In the present embodiment, it is preferred to obtain the cepstral coefficients using linear prediction. In the preferred embodiment, linear prediction is made in the time domain, using the following relation:

$A(z) = \Sigma a_k{}^* z^{-k}$ ; $k = 0, 1,...,p$; $a_0 = 1$; $a_p <> 0$

The linear prediction coefficients are the coefficients for a filter which would create the input waveform if it was excited. The preferred embodiment uses twelfth order linear prediction analysis, although satisfactory results appear to be obtained using tenth order or above.

The cepstral coefficients are derived from the linear prediction using the following relation:

$\ln[1/A(z)] = \Sigma c_n{}^* z^{-n}$ ; $n = 1,2,...,\infty$

The expression obtained from the relation above is the sum of the cepstral coefficients. This can then be differentiated for a recursive equation which defines the coefficients.

The cepstral coefficients are then averaged over the frame periods of the utterance being analysed, and the average is subtracted from each individual value to give the respective cepstral coefficients used as a parameter value for the relevant frame. The operation of subtracting the average value normalises the cepstral coefficients for the energy of the speech. This is important as the energy level can vary considerably from occasion to occasion when the same speaker utters the same word, especially if the speaker is talking to the verification system over the telephone.

As an alternative, it is also possible to obtain cepstral coefficients using a cosine transformation of the log of the speech spectrum in the frequency domain. This results in slightly different values for the cepstral coefficients, but the consistency of the results appears to be comparable with the results obtained when the linear prediction is made in the time domain, so that cepstral coefficients obtained in this way are also usable for speaker verification. However, this method of calculation tends to take up more CPU time in the speaker verification system, and is less desirable for that reason.

The first twelve cepstral coefficients are calculated for each frame period, and each forms a respective one of the rows in the matrix of Figure 7.

ENROLMENT

The operation of a speaker verification system has two distinct phases, enrolment and verification. During enrolment, the characteristics of the speech of an individual are made known to the system. During verification, the characteristics obtained during enrolment of the speaker whose identity is being claimed are used to determine whether the unknown speaker has in fact the claimed identity.

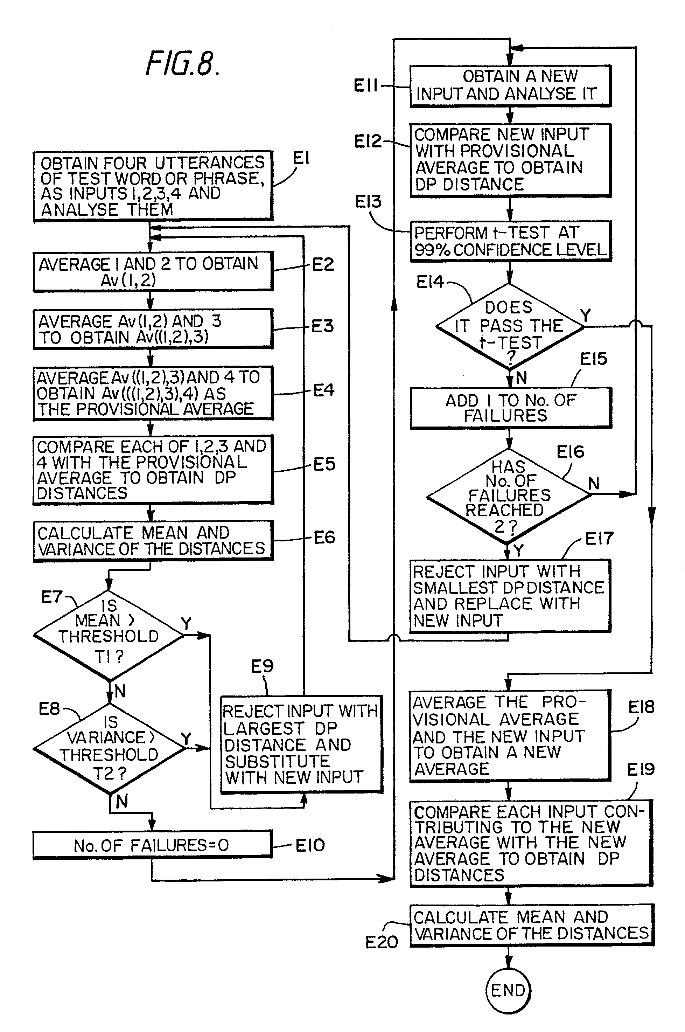

Figure 8 is a flow diagram of the enrolment process for one test word or phrase in the preferred embodiment of the present invention. In step E1, the system obtains from the speaker being enrolled four utterances of a pre-selected test word or phrase. The respective inputs from the four utterances are labelled as inputs 1, 2, 3 and 4 and each one is analysed as described above to identify the word start and end points and to extract the cepstral coefficients and obtain the data for the matrix of Figure 7.

In step E2, the cepstral coefficients of inputs 1 and 2 are combined using dynamic programming to obtain an averaged parameter series Av(1,2). In step E3 Av(1,2) is combined with input 3 to obtain a further average Av((1,2),3). In step E4 Av((1,2),3) is combined with input 4 to obtain Av(((1,2),3),4). This average will form part of a provisional model for the test word or phrase, and will be referred to as the provisional average.

In step E5, the cepstral coefficients of inputs 1, 2, 3 and 4 are compared using dynamic programming with the provisional average to obtain DP distances. In step E6, the mean of the distances obtained in step E5 is calculated, together with the variance of the distances from the mean.

The mean obtained in step E6 is compared with a threshold value T1 in step E7. If the mean is less than the threshold, the variance obtained step E6 is compared with another threshold value T2 in step E8. If the mean is greater than T1 or the variance is greater than T2, the input with the greatest DP distance is rejected and a further input is obtained to be used in place of the rejected input, in step E9. The process then returns to step E2 to re-calculate the provisional average.

Steps E7 to E9 ensure that if the original inputs contain excessive variability, the least characteristic input utterance (which perhaps includes a hesitation, a cough or a different stress pattern from the others) is relaced by a new input utterance which may be more characteristic. This reduces the likelihood of false positives ("recognising" imposters) during verification.

If neither the mean nor the variance from step E6 exceeds its respective threshold, the process passes to step E10. This concludes the creation of the provisional model.

In step E10 a counter for the number of inputs which have failed a comparison test is set to zero.

The provisional model is then tested and refined. In step E11 a further input is obtained and analysed. The cepstral coefficients of the new input are compared using dynamic programming with the provisional average in step E12, to obtain a DP distance.

A t-test is performed in step E13 to determine whether the new input comes from the same distribution as was used to form the provisional average. The t-test is performed using the t-value for the 99% confidence level in a one-tailed test, for the appropriate number of degrees of freedom. At this point, the provisional average has been obtained using four test inputs, and therefore it has three degrees of freedom.

In step E14 it is determined whether the new input passed the t-test. If it failed, the enrolment process moves to step E15. In this step, the stored number of failures is increased by one, and then in step E16 the stored number of failures is tested.

If there have not yet been two failures, the enrolment process returns to step E11, and another new input is obtained. However, if two inputs have failed the t-test, it is concluded that the provisional model itself is incorrect.

The error in the provisional model at this point is the reverse of the error tested for in steps E7 and E8. Step E7 and E8 cause the rejection of a provisional model having too much variability. Step E16 causes the rejection of a model having too little variability. Too little variability will increase the likelihood of false negatives (failing to recognise a genuine speaker) during verification. In order to increase the variability, the input having the smallest DP distance in step E5 is rejected, and is replaced by a new input, in step E17, and the enrolment process begins again from step E2.

If at step E14 it is determined that the new input has passed the t-test, a new model is calculated.

The calculation of the new model begins in step E18. The previous provisional average is combined with the new input using dynamic programming to obtain a new average. Then in step E19 each of the inputs contributing to the new average is compared with the new average using dynamic programming to obtain DP distances. Then, in step E20 the mean of the DP distances is calculated, together with the variance of the distances from the mean. This concludes the process of obtaining a model for the test word or phrase.

In the process of Figure 8 as described above, in step E17 one input contributing to the provisional model is rejected and replaced if it is concluded following step E16 that the provisional model is incorrect. However, in a variation of the process, more than one input may be rejected and replaced in step E17, and in one alternative all the inputs contributing to the provisional model are rejected and replaced in this step.

This process for testing and refining the model for a test word or phrase is valuable, because it reduces or eliminates the effect of uncharacteristic utterances, and tends to improve the quality of the final reference template obtained by the speaker verification system.

In the description with reference to Figure 8, it has been stated that four inputs are accepted initially to form the initial provisional model, and that the threshold value for the number of failures is two while only one further input utterance needs to be accepted (bringing the total number of acceptances to five) and combined with the provisional model to end this stage of the enrolment process. However, other values could be used. If more than five acceptances are required, then after step E20 the process returns to step E11 to obtain a new utterance, and steps E11 to E20 are repeated until the required number of acceptances is obtained (or until the threshold value of rejections is reached). A lower threshold value for the number of failures makes it more likely that the enrolment system will abandon an input and start again, whereas a higher required number of acceptances increases the number of enrolment utterances which a speaker has to make. Both of these will tend to make the enrolment process more tedious. They will also both tend to improve the quality of the final template obtained, but will make it harder to reach the required number of acceptances before reaching the threshold for failures, with result that the enrolment process may become impractical.

As a further refinement of the enrolment process, the duration of each utterance (the time between the identified start and end points) may also be used. Average values for the duration may be formed, and distances obtained, in the same manner as has been described above for cepstral co-efficients except that the time-warping properties of dynamic programming do not need to be used. In order to be accepted, an input would have to pass separate t-tests for cepstral coefficients and duration. This allows the detection and rejection of utterances in which the end points for analysis have been identified incorrectly.

The method described above, and illustrated in Figure 8, provides a model for one test word or phrase. However, as has been described with reference to Figures 1 and 2, in the preferred embodiment the speaker whose identity is being verified is asked to speak three test words or phrases. These are preferably selected from a suite of about ten test words or phrases for which the speaker has been enrolled. The Figure 8 process must be carried out to obtain models for each of the test words or phrases in the suite. Once this has been done, a final model, the stored reference template, is obtained using the models for all of the test words or phrases.

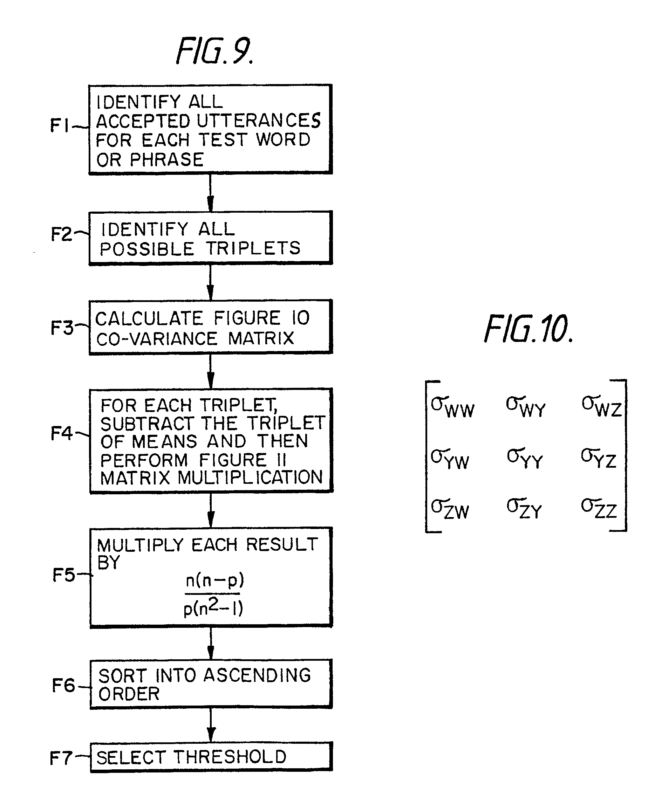

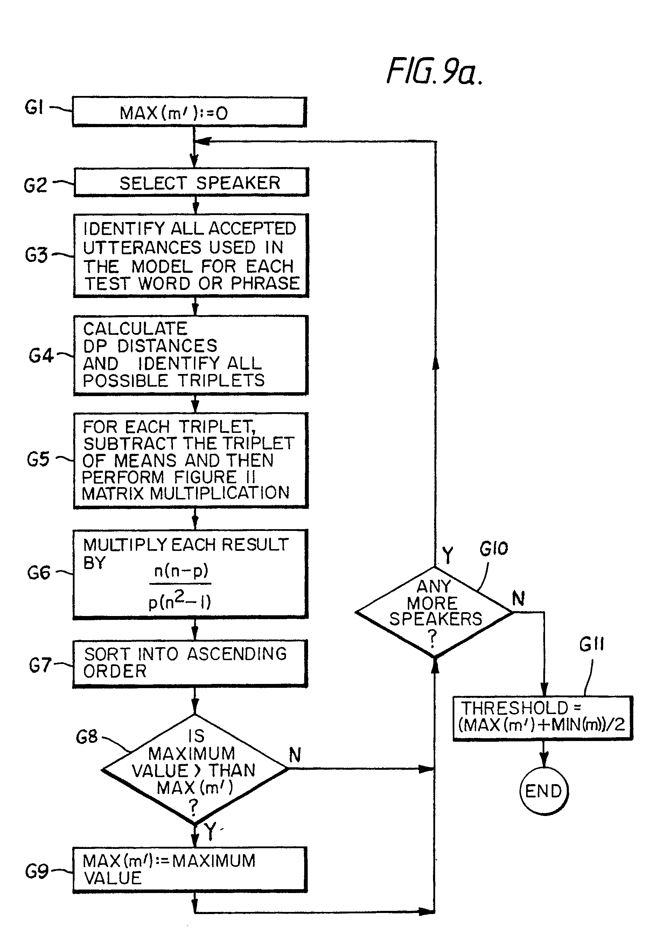

The process for deriving the final model is illustrated in Figures 9 and 9a. For convenience, in Figure 9 it is assumed that there are only three test words or phrases in the suite. The method will be substantially the same for a larger suite, but the amount of calculation required will be increased.

First, in step F1, all the accepted utterances for each test word or phrase are identified. In the process of Figure 8, five utterances are accepted for each test word or phrase. Each utterance will have a corresponding DP distance between itself and the average for the test word or phrase, and there will also be a mean distance for the test word or phrase. Thus, if the suite consists of three test words, W, Y and Z, word W will have five accepted utterance distances W1 to W5 and a mean distance mean(W), word Y will have accepted utterance distances Y1 to Y5 and mean distance mean(Y) and word Z will have accepted utterance distances Z1 to Z5 and mean distance mean(Z).

In step F2, all possible triplets of utterances which could be used in verification are identified. Thus, for five utterances of each of three words, there are 125 possible triplets, (W1, Y1, Z1), (W1, Y1, Z2), (W1, Y1, Z3), .... ,(W3, Y4, Z5), (W3, Y5, Z1), ....,(W5, Y5, Z4), (W5, Y5, Z5).

It should be noted that if there are ten test words or phrases in the suite, but only three are used in any given verification process, step F2 identifies all possible triplets of utterances, not all possible groups of ten.

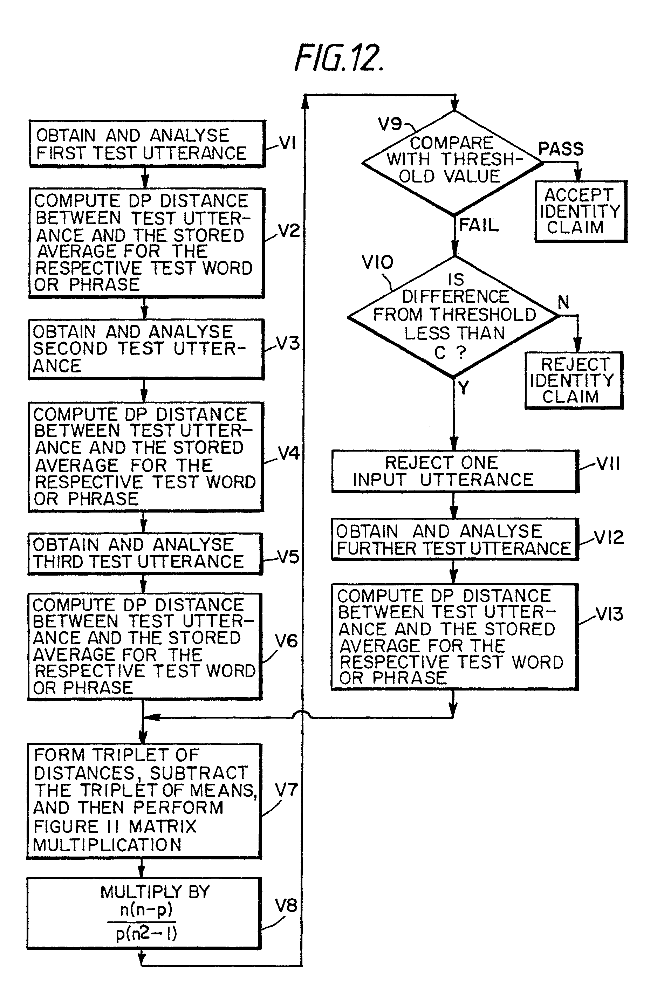

Then in step F3 the co-variance matrix of Figure 10 is calculated. This is the matrix of co-variance between the words W, Y, Z used in the verification operation. If there was a total of ten test words or phrases in the suite but only three were used in any given verification operation, then separate three-by-three co-variance matrices would need to be calculated for each combination of test words or phrases which could be used in a verification operation.

The leading diagonal of the co-variance matrix is provided by the variances of the models for the respective words or phrases provided by the method of Figure 8. The remaining values have to be calculated. The matrix is then inverted and stored.

Then, in step F4, there is calculated, for each triplet of accepted utterance distances (Wi, Yj, Zk), where i, j and k each vary from 1 to 5, the value m where

$$m = ([x]-[\mu])^T \times S^{-1} \times ([x]-[\mu]),$$

$$[x] = \begin{bmatrix} Wi \\ Yj \\ Zk \end{bmatrix} \qquad [\mu] = \begin{bmatrix} Mean\ (W) \\ Mean\ (Y) \\ Mean\ (Z) \end{bmatrix}$$

"T" means tranpose and $S^{-1}$ is the inverted co-variance matrix.

This matrix multiplication is illustrated in Figure 11. As can be seen, it results in a single value m.

For convenience, in step F5 the value m is scaled by multiplying it by $(n(n-p))/(p(n^2-1))$, where n is the number of accepted utterances in each word or phrase, and p is the number of words or phrases in each verification sequence. It should be noted that if a total of ten test words or phrases are used in enrolment, but only three are used in any given verification operation, p equals 3. This operation scales the value m for the effects of p and n.

The numbers obtained in this way will be distributed in an F-distribution with n-1 and p degrees of freedom.

In step F6, the numbers obtained in step F5 are sorted into ascending order. Each number represents a different confidence level in the F-distribution. Each possible triplet of enrolment utterances is a triplet produced by the speaker being enrolled, and therefore should lead to acceptance of the claimed identity if it was produced as a triplet of test utterances during the verification process. Accordingly, a confidence level in the F-distribution can be selected as a threshold value such that all of the ordered values of step F6 lead to acceptance. However, in practice such a threshold value will also permit a small proportion of false acceptances, i.e. acceptances of a claim to the identity made by an imposter. By setting the threshold value at a different level, so that some of the ordered values provided by F6 would lead to rejection of the claimed identity, it is possible to reduce the number of false acceptances by the verification system, at the price of a proportion of false rejections. In different situations, a different balance between the number of false acceptances and the number of false rejections will need to be struck, depending on the level of security required and the extent to which the inconvenience of false rejections is acceptable in the environment in which the system is to be used. One point at which the balance is frequently struck is known as the "equal error" point, at which the number of false acceptances is the same as the number of false rejections.

In step F7, the threshold is selected which will be suitable for the particular use to which the verification system is intended to be put. Different circumstances may require different thresholds. One presently preferred method for selecting the threshold in step F7 is shown in Figure 9a.

The principle of the method of Figure 9a is that the threshold value is chosen to be the average of the lowest value m, obtained in the process of Figure 9, and the highest of a number of values $m'$, which correspond to the values m but are derived from comparing the models of the words for the speaker being enrolled with the input utterances from all the other speakers who have already been enrolled in the system. Since each value m represents a genuine utterance, and each value $m'$ represents an utterance from a different speaker, the average between the lowest value for m and the highest value for $m'$ is regarded as a good compromise value for the threshold.

The method of Figure 9a begins with an initialisation step G1, in which a value $\text{Max}(m')$ is set to zero. Then, in step G2, a speaker other than the speaker being enrolled is selected. In step G3, all the accepted utterances which were used in creating the model for each test word or phrase for the selected speaker are identified.

Each speaker is enrolled on the same set of test words or phrases. Therefore, for each of the utterances identified in step G3, from the speaker selected in step G2, there will be a corresponding model for that test word or phrase for the speaker being enrolled. In step G4, there is calculated the DP distance between each of the identified utterances and the mean for the relevant test word or phrase from the model for the speaker being enrolled. That is to say, the DP distance is obtained between an input utterance for a speaker known to be incorrect and the mean obtained from inputs from the genuine speaker. Thus, if the suite consists of three test words or phrases, W, Y and Z, five distances $W1'$ to $W5'$ will be obtained for the word W, five distances $Y1'$ to $Y5'$ will be obtained for the word Y, and five distances $Z1'$ to $Z5'$ will be obtained for the word Z. All possible triplets of utterances are identified, in the same manner as in step F2 of Figure 9. For five utterances of each of three words, there are 125 possible triplets.

In the calculation of $m'$, the covariance matrix and the triplet of means which are used will be those for the genuine speaker, ie the one presently being enrolled. These have already been obtained in the process of Figure 9, and so there is no need to calculate them again. Therefore, in the next step, step G5, there is calculated for each triplet of accepted utterance distances $(Wi', Yj', Zk')$, where i, j and k each vary from 1 to 5, the value $m'$ where

$$m' = ([x']-[\mu])^T \times S^{-1} \times ([x']-[\mu]),$$

$$[x'] = \begin{bmatrix} Wi' \\ Yj' \\ Zk' \end{bmatrix} \qquad [\mu] = \begin{bmatrix} \text{Mean } (W) \\ \text{Mean } (Y) \\ \text{Mean } (Z) \end{bmatrix}$$

"T" means transpose and $S^{-1}$ is the inverted co-variance matrix for the speaker being enrolled. This calculation closely corresponds to the calculation performed in step F4 of Figure 9. For each triplet, the triplet of means is subtracted and then the matrix multiplication illustrated in Figure 11 is carried out, to result in the single value $m'$. In this case, the triplet $[x']$ is the triplet of distances obtained from the accepted utterances for the selected speaker other than the speaker currently being enrolled, but the triplet

of means [μ] and the covariance matrix S are those for the speaker being enrolled.

In step G6 each value m' is scaled by multiplying it by $(n(n-p))/(p(n^2-1))$, where n is the number of accepted utterances in each word or phrase, and p is the number of words or phrases in each verification sequence. This corresponds to step F5 of Figure 9, and is performed for the same reason.

Then, in step G7 the scaled values m' are sorted into ascending order. In step G8, the largest value of m' is compared with the value Max(m'). If the maximum value of m' just obtained is greater than Max(m'), Max(m') is reset to equal that maximum value, in step G9. Then, in step G10 it is tested whether all of the other speakers already enrolled in the system have so far been selected. If there are any more speakers which have not been selected, the process returns to step G2, and another speaker is selected, and the above-described procedure.

Since Max(m') is originally set to zero in step G1, the process will always pass from step G8 to G9 for the first speaker to be selected. However, for subsequent speakers the maximum value of m' obtained may be less than the current value of Max(m'). In this case, the process moves directly from step G8 to step G10.

If in step G10 it is determined that there are no more speakers to be selected, the process moves to step G11. At this point, Max(m') will have been set to the maximum value of m' obtained from performing steps G2 to G7 with all the speakers already enrolled in the system. The value Min(m) is set to be the lowest of the values m for the genuine speaker, ie the speaker being enrolled, obtained in steps F1 to F6 of Figure 9. In step G11, the verification threshold for the speaker being enrolled is set to (Max(m') + Min(m)-)/2.

This concludes the enrolment process. The final model or reference template for the enrolled speaker, which will be stored by the system, is made up of (i) the final version of the provisional dynamic programming average of the cepstral coefficients, produced in step E16, for each test word or phrase in the suite of test words or phrases (the reference template for each test word or phrase), (ii) the final version of the mean distance, calculated in step E20, for each test word or phrase, (iii) the inverse of the co-variance matrix calculated in step F3, or the inverse of each co-variance matrix if the suite of test words or phrases is larger than the set which will be used in any particular verification operation, and (iv) the threshold value selected in step F7 using the process of Figure 9a. The values Max(m') and Min(m) are also stored for each enrolled speaker to enable the threshold to be updated whenever a further speaker is enrolled.

When a new speaker is enrolled on the system, that person's speech may be more similar to some speaker who has already been enrolled than is any other speaker who has already been enrolled. That is to say, if the accepted input enrolment utterances of the new speaker are compared with the reference templates for each test word or phrase for a speaker who is alread enrolled, there might be obtained a higher value of m' than has so far been obtained for the speaker who has already been enrolled. Accordingly, after a new speaker has been enrolled and the final model or reference template for the new speaker has been prepared and stored by the system, the existing stored threshold values for previously enrolled speakers will be updated.

For each previously enrolled speaker the model for each test word or phrase for that speaker is compared with the accepted input utterances for the newly enrolled speaker, to obtain the cross-speaker distances X1' to X5', Y1' to Y5' and Z1' to Z5'. Steps G4 to G7 are then carried out using these DP distances, and using the triplet of means and the covariance matrix of the selected previously-enrolled speaker. The maximum value of m' thus obtained is compared with the currently stored value of Max(m') for the speaker concerned. If the maximum new value of m' is greater, Max(m') is updated and the threshold for that speaker is calculated in accordance with step G11 using the updated value of Max(m'). This process is carried out for each previously enrolled speaker in turn, with the values of Max(m') and the threshold being updated if necessary. Clearly, if the newly-calculated values of m' are all less than the current value stored for Max(m'), neither the current value of Max(m') nor the current value of the threshold is altered.

Where the suite of test words or phrases contains more test words or phrases then are used in any particular verification operation, it may be advantageous in step F6 to sort the values for each respective possible combination of words in the verification operation into a separate ascending order, and in step F7 select a separate respective threshold value for each respective combination which may used in a verification operation, using the process of Figure 9a separately for each combination. In this case, for each possible combination of test words and phrases to be used in a verification operation, there would be stored a respective inverse co-variance matrix, a respective threshold value, and respective values Min(m) and Max(m').

VERIFICATION

Figure 12 is a schematic flow diagram of the verification method used in the preferred embodiment. An unknown person makes a claim to an identity, and in step V1 a test utterance of a first test word or phrase is obtained by the verification system. The input waveform obtained from the test utterance is analysed in the manner described above to extract the cepstral coefficients.

In step V2, the distance is computed between the test utterance and the stored average for the respective test word or phrase, using dynamic programming.

In step V3, a test utterance of a second test word or phrase is obtained and analysed, and a dynamic programming distance is obtained in step V4. The third test utterance is obtained and analysed in step V5, and a distance for it is obtained in step V6.

In step V7, the three distances obtained in steps V2, V4 and V6 are formed into a triplet vector matrix [x], and the stored mean distances for the respective test words or phrases are formed into a triplet vector matrix [$\mu$]. A value (m) is then obtained in the same manner as in step F4. That is to say vector [$\mu$] is subtracted from vector [x], and the resulting matrix and its transpose are used together with the inverse co-variance matrix for the three test words or phrases to perform the matrix multiplication of Figure 11.

Then, in step F8, the resulting value m is scaled by being multiplied by $(n(n-p))/(p(n^2-1))$, in the same manner as in step F5.

In step V9, the scaled value is compared with the threshold selected in step F7. If it passes the comparison, the verification is successful and the unknown speaker is accepted as having the claimed identity.

If it fails the comparison, the process passes to step V10. This tests whether the scaled value m differs from the threshold value by less than a critical amount C. If the difference is less than C, the input is considered to be sufficiently close to the threshold to allow the speaker another chance, and the process passes to step V11. Otherwise the verification is unsuccessful and the unknown speaker is rejected as not having the claimed identity.

In step V11, one of the input test utterances is rejected. Typically the test utterance with the greatest DP distance is rejected. In step V12 a new test utterance is obtained to replace the rejected one, and is analysed. In one option, the unknown speaker is asked to repeat the test word or phrase for the rejected utterance. Alternatively, if the claimed identity is enrolled with more test words or phrases than have so far been used in the verification operation, there may be obtained an utterance of a randomly selected test word or phrase which has not so far been used.

In step V13 a DP distance is obtained for the new input in the same way as DP distances are obtained in steps V2, V4 and V6. The process then returns to step V7 to re-test the identity claim.

A limit may be placed on the number of times steps V11 to V13 may be passed through.

As mentioned above, other parameters such as pitch and delta cepstrum may be used in the enrolment and verification processes, in addition to the cepstral coefficients. There are various ways in which this could be done. First, the additional parameters could be used to provide further rows in the matrix of Figure 7, and the dynamic programming comparison could be used in each of the comparison steps of Figures 8, 9 and 12, to obtain a single distance measure which takes all of the parameters into account. Alternatively, the different parameters may be treated separately for part of the processing of each enrolment and test utterance, for example to obtain separate distance measures for each parameter, and the results combined at a later stage. The computation is simpler if a single distance measure is obtained representing all of the parameters, but in this case it is not possible to select different weights to be given to different parameters. If different parameters are treated separately for an initial part of each comparison operation, the different parameters may be given different weights when they are combined.

Following a successful verification, the reference template for the verified identity may be updated by incorporating the verification test utterances into the test word or phrase templates. This may be done for each successful verification, or may be done only for test utterances having a smaller DP distance than the largest DP distance of the accepted utterances currently contributing to the reference template for that test word or phrase.

The preferred embodiment of the present invention has a number of features which do not appear to have been used in prior art systems and which appear to provide improved performance in the embodiment. These features include the following:

The use of pitch information, preferably in combination with energy, in identifying the start and end points of utterances;

The use of a plurality of test utterances during verification, which are separately analysed and compared with separate respective templates, so as to compute similarity values (distances) independently for each

14

test utterance, preferably in combination with the use of a statistical method of combining the computed simliarity values into a single measure;

The use of a multivariate distance distribution test, i.e. a test which uses the distribution of a plurality of distances (similarity values);

The testing of enrolment inputs to identify and discard unreliable inputs;

The use of dynamic programming averaging with a plurality of enrolment utterances to create a reference template;

The use of values of co-variance between parameters for a plurality of different test utterances, in reaching a verification decision; and

The obtaining of a single number as a figure of merit which represents comparison results using a plurality of test utterances.

The present invention is not limited to the preferred embodiment described with reference to the drawings, and many variations and alternatives will be apparent to those skilled in the art. Although the present invention has been described in terms of a speaker verification system, embodiments of the present invention can also be used in speaker identification systems to identify speakers who have not made a prior identity claim, particularly when the total number of people enrolled on the system is relatively small, e.g. less than a hundred.

## Claims

1. A method of enrolling speakers in a speech analysis system in which a speaker being enrolled provides a plurality of utterances at least one of which is subjected to a comparison operation based on one or more others of the plurality of utterances, and in accordance with the results of the comparison the system decides whether to reject or accept a said utterance, the system storing characteristics of the speech input to it by the speaker derived from analysis only of non-rejected utterances.

2. A method according to claim 1 in which a first plurality of utterances provided by the speaker being enrolled are combined to provide a comparison reference, and one or more further utterances is compared with the comparison reference in a said comparison operation.

3. A method according to claim 2 in which, if a said further utterance is accepted in a said comparison operation, it is combined with the comparison reference to provide an updated comparison reference.

4. A method according to claim 2 or claim 3 in which, if a predetermined number of said further utterances are accepted before the number which are rejected reaches a rejection threshold, the system stores speech characteristics derived from analysis of the utterances of the first plurality and the accepted further utterances.

5. A method according to any one of claims 2 to 4 in which, if the number of said further utterances which are rejected reaches a rejection threshold before a predetermined number are accepted, at least one of the utterances of the first plurality is rejected and replaced by a replacement utterance provided by the speaker being enrolled, and a new comparison reference is provided by combining any remaining utterances of the first plurality and the or each said replacement utterance.

6. A method according to any one of claims 1 to 5, in which the durations of utterances are used in the said comparison operation.

7. A method according to any one of claims 1 to 6, in which the cepstral co-efficients of utterances are used in the said comparison operation.

8. A method of enrolling a speaker in a speech analysis system in which the system derives and stores characteristics of speech input to it by the speaker, the system deriving the said characteristics from utterances of a plurality of different texts input to it by the speaker and storing data representing the co-variability of the said characteristics between utterances of different texts.

9. A method according to claim 8 in which respective characteristics specific to utterances by the speaker of respective texts are derived and stored by the system.

10. A method according to claim 9, in which at least one parameter of each said speech utterance is analysed, the said stored respective characteristics of the respective texts comprising a combination of the analysis results for a plurality of utterances of each text , and the said data represents or is derived from the co-variance between respective texts of the differences between the analysis results and the said combination of the analysis results for each respective text.

11. A method of identifying a spoken utterance in a period of input waveform, in which the input waveform is analysed to discover the portion or portions thereof having pitch, and the spoken utterance is defined as comprising a portion or a plurality of closely spaced portions having pitch.

12. A method according to claim 11, in which the input waveform is also analysed with respect to a parameter other than pitch, and the spoken utterance is defined as comprising the said portion or portions together with any adjacent portions defined by means of the said parameter.

13. A method according to claim 12, in which the said parameter is instantaneous energy.

14. A method according to claim 12 or claim 13, in which a first instant is defined as the beginning of the portion, or the beginning of the first of the closely spaced portions, having pitch, a second instant is defined as the end of the portion, or the end of the last of the closely spaced portions, having pitch, a third instant is defined as the instant most closely preceding the first instant at which the said parameter has a predetermined value, a fourth instant is defined as the instant most closely following the second instant at which the said parameter has a predetermined value, and the spoken utterance is identified as beginning at the third instant and ending at the fourth instant.

15. A method according to claim 14, in which the predetermined value for the third instant and the predetermined value for the fourth instant are each defined in terms of a proportion of the maximum value of the parameter during the said portion or plurality of closely spaced portions having pitch.

16. A method according to claim 14 or claim 15, in which the predetermined value for the third instant and the predetermined value for the fourth instant are the same value.

17. A method of recognising a speaker by analysing a test utterance obtained from the speaker and comparing the analysis results with data representing speech characteristics of a particular speaker, in which the test utterance is first analysed to identify the pitch periods of the voiced portions thereof, and the test utterance is subsequently analysed to determine the value of at least one parameter in each of a plurality of analysis periods of the test utterance, the analysis periods being selected so that each bears a similar timing relationship to a respective identified pitch period, an artificial identification of pitch periods being made in the first analysis in a preset manner during un-voiced portions of the test utterance.

18. A method according to claim 17, in which the said artificially identified pitch periods are shorter than the said analysis periods.

19. A method according to claim 17 or claim 18 in which the first analysis only identifies pitch periods falling within a permitted range, the longest period in the range being at least twice the shortest period, and for voiced portions of the test utterance having a voice pitch above the permitted range the first analysis identifies pitch periods which are an integer multiple of the periods of the said voice pitch.

20. A method according to any one of claims 17 to 19, in which the first analysis only identifies pitch periods not exceeding a maximum length, and the length of the said analysis periods exceeds the said maximum length.

21. A method of speaker recognition in which, in respect of each of a plurality of test utterances obtained from a speaker to be identified, speech characteristics obtained from the test utterance are compared with stored speech characteristics for a particular speaker, so as to obtain a corresponding plurality of comparison results, the said plurality of comparison results being used to derive a single recognition output.

22. A method according to claim 21 in which the said comparison results comprise values representing respective degrees of similarity between each said test utterance and the stored speech characteristics with which it is compared, and the values are used in a statistical analysis to derive the single recognition output.

23. A method according to claim 21 or claim 22 , in which different said test utterances are compared with stored speech characteristics for speech by the said particular speaker of different texts.

24. A method according to claim 23 in which data relating to the co-variance between the said speech characteristics of the different texts is stored, and the said comparison results are used in combination with the said co-variance values in the derivation of the single recognition output.

25. A method according to any one of claims 21 to 22 in which an F-test is used in the derivation of the single recognition output from the comparison results.

26. A method of recognising a speaker by analysing a test utterance obtained from the speaker, comparing the analysis results with data representing speech characteristics of a particular speaker to obtain a value for the difference between them, and comparing the said value with a threshold,

in which the threshold is determined by obtaining a first plurality of said values, for respective utterances known to have been provided by the said particular speaker, obtaining a second plurality of said values, for respective utterances known to have been provided by speakers of other than the said particular speaker, and selecting the threshold in dependence on at least one value of the first plurality of values and one value of the second plurality of values.

27. A method according to claim 26 in which the threshold is selected as the average of the value, amongst the first plurality of values, representing the greatest difference from the data representing speech characteristics of the particular speaker, and the value, amongst the second plurality of values, representing the smallest difference from the said data.

16

# FIG.1.

# FIG.2.

## FIG.3.

(a)     (b)         (c)    (d)

## FIG.4.

## FIG.6.

NOISE    "MAN"   "CHES"    "TER"

## FIG.5.

15ms PERIODS

PITCH PEAKS

ANALYSIS
FRAME
PERIODS

## FIG.7.

CEPSTRAL
CO-EFFICIENTS

TIME (FRAMES)

## FIG.11.

□ × □ × ▯ = □

## FIG.8.

OBTAIN FOUR UTTERANCES OF TEST WORD OR PHRASE, AS INPUTS 1,2,3,4 AND ANALYSE THEM — E1

AVERAGE 1 AND 2 TO OBTAIN Av(1,2) — E2

AVERAGE Av(1,2) AND 3 TO OBTAIN Av((1,2),3) — E3

AVERAGE Av((1,2),3) AND 4 TO OBTAIN Av(((1,2),3),4) AS THE PROVISIONAL AVERAGE — E4

COMPARE EACH OF 1,2,3 AND 4 WITH THE PROVISIONAL AVERAGE TO OBTAIN DP DISTANCES — E5

CALCULATE MEAN AND VARIANCE OF THE DISTANCES — E6

E7 — IS MEAN > THRESHOLD T1 ?  
N ↓  Y →

E8 — IS VARIANCE > THRESHOLD T2 ?  
N ↓  Y →

E9 — REJECT INPUT WITH LARGEST DP DISTANCE AND SUBSTITUTE WITH NEW INPUT

No. OF FAILURES = 0 — E10

OBTAIN A NEW INPUT AND ANALYSE IT — E11

COMPARE NEW INPUT WITH PROVISIONAL AVERAGE TO OBTAIN DP DISTANCE — E12

PERFORM t-TEST AT 99% CONFIDENCE LEVEL — E13

E14 — DOES IT PASS THE t-TEST ?  
Y →  
N ↓

ADD 1 TO No. OF FAILURES — E15

E16 — HAS No. OF FAILURES REACHED 2 ?  
N →  
Y ↓

REJECT INPUT WITH SMALLEST DP DISTANCE AND REPLACE WITH NEW INPUT — E17

AVERAGE THE PROVISIONAL AVERAGE AND THE NEW INPUT TO OBTAIN A NEW AVERAGE — E18

COMPARE EACH INPUT CONTRIBUTING TO THE NEW AVERAGE WITH THE NEW AVERAGE TO OBTAIN DP DISTANCES — E19

CALCULATE MEAN AND VARIANCE OF THE DISTANCES — E20

END

## FIG.9.

F1 — IDENTIFY ALL ACCEPTED UTTERANCES FOR EACH TEST WORD OR PHRASE

F2 — IDENTIFY ALL POSSIBLE TRIPLETS

F3 — CALCULATE FIGURE 10 CO-VARIANCE MATRIX

F4 — FOR EACH TRIPLET, SUBTRACT THE TRIPLET OF MEANS AND THEN PERFORM FIGURE 11 MATRIX MULTIPLICATION

F5 — MULTIPLY EACH RESULT BY
$$\frac{n(n-p)}{p(n^2-1)}$$

F6 — SORT INTO ASCENDING ORDER

F7 — SELECT THRESHOLD

## FIG.10.

$$\begin{bmatrix} \sigma_{WW} & \sigma_{WY} & \sigma_{WZ} \\ \sigma_{YW} & \sigma_{YY} & \sigma_{YZ} \\ \sigma_{ZW} & \sigma_{ZY} & \sigma_{ZZ} \end{bmatrix}$$

# FIG.9a.

```
G1 —[ MAX(m'):=0 ]
              │
              ▼
G2 —[ SELECT SPEAKER ]
              │
              ▼
G3 —[ IDENTIFY ALL ACCEPTED
      UTTERANCES USED IN
      THE MODEL FOR EACH
      TEST WORD OR PHRASE ]
              │
              ▼
G4 —[ CALCULATE
      DP DISTANCES
      AND IDENTIFY ALL
      POSSIBLE TRIPLETS ]
              │
              ▼
G5 —[ FOR EACH TRIPLET,
      SUBTRACT THE TRIPLET
      OF MEANS AND THEN
      PERFORM FIGURE II
      MATRIX MULTIPLICATION ]
              │
              ▼
G6 —[ MULTIPLY EACH RESULT
      BY    n(n−p)
           ────────
           p(n²−1)  ]
              │
              ▼
G7 —[ SORT INTO ASCENDING
      ORDER ]
              │
              ▼
G8 < IS MAXIMUM VALUE > THAN MAX(m') ? >
```

$$\text{G6: MULTIPLY EACH RESULT BY } \frac{n(n-p)}{p(n^2-1)}$$

G8 — IS MAXIMUM VALUE > THAN MAX(m') ?  —N→

G9 — MAX(m'):=MAXIMUM VALUE

G10 — ANY MORE SPEAKERS ? — Y (up) / N →

G11 — THRESHOLD = (MAX(m')+MIN(m))/2

END

## FIG.12.

```
OBTAIN AND ANALYSE          VI
FIRST TEST UTTERANCE
          |
          v
COMPUTE DP DISTANCE
BETWEEN TEST UTTER-         V2
ANCE AND THE STORED
AVERAGE FOR THE
RESPECTIVE TEST WORD
OR PHRASE
          |
          v
OBTAIN AND ANALYSE          V3
SECOND TEST UTTER-
ANCE
          |
          v
COMPUTE DP DISTANCE
BETWEEN TEST UTTER-
ANCE AND THE STORED         V4
AVERAGE FOR THE
RESPECTIVE TEST WORD
OR PHRASE
          |
          v
OBTAIN AND ANALYSE          V5
THIRD TEST UTTERANCE
          |
          v
COMPUTE DP DISTANCE
BETWEEN TEST UTTER-
ANCE AND THE STORED         V6
AVERAGE FOR THE
RESPECTIVE TEST WORD
OR PHRASE
          |
          v
FORM TRIPLET OF
DISTANCES, SUBTRACT
THE TRIPLET OF MEANS,       V7
AND THEN PERFORM
FIGURE II MATRIX
MULTIPLICATION
          |
          v
MULTIPLY BY                 V8
n(n-p)
------
p(n2-1)
```

V9 — COMPARE WITH THRESH-OLD VALUE — PASS → ACCEPT IDENTITY CLAIM

FAIL

VIO — IS DIFFERENCE FROM THRESHOLD LESS THAN C ? — N → REJECT IDENTITY CLAIM

Y

REJECT ONE INPUT UTTERANCE — VII

OBTAIN AND ANALYSE FURTHER TEST UTTERANCE — VI2

COMPUTE DP DISTANCE BETWEEN TEST UTTER-ANCE AND THE STORED AVERAGE FOR THE RESPECTIVE TEST WORD OR PHRASE — VI3